# EUROPÄISCHE PATENTSCHRIFT

(11) **EP 1 334 443 B1**
(45) Veröffentlichungstag und Bekanntmachung des Hinweises auf die Patenterteilung: **23.03.2005**
(21) Anmeldenummer: 01992953.8
(22) Anmeldetag: 30.10.2001
(51) Int. Cl.: G06F 17/30, G06F 17/27, G06K 9/62, G10L 15/00, G10L 15/18

(54) **VERFAHREN ZUR ERMITTLUNG VON ÄHNLICHKEITEN ZWISCHEN EREIGNISFOLGEN**
METHOD FOR DETERMINING SIMILARITIES BETWEEN SERIES OF EVENTS
PROCEDE POUR DETERMINER DES SIMILITUDES ENTRE DES SUITES D'EVENEMENTS

(30) Priorität: 31.10.2000 DE 10054124
(43) Veröffentlichungstag der Anmeldung: 13.08.2003
(73) Patentinhaber: Linssen, Peter, 70565 Stuttgart (DE)
(72) Erfinder: Linssen, Peter, 70565 Stuttgart (DE)
(74) Vertreter: Hofmann, Harald
(86) Internationale Anmeldenummer: PCT/DE2001/004126
(87) Internationale Veröffentlichungsnummer: WO 2002/037321

(56) Entgegenhaltungen:
- EP-A- 0 947 937
- US-A- 5 062 143
- LENSU A ET AL: "Similar document detection using self-organizing maps" KNOWLEDGE-BASED INTELLIGENT INFORMATION ENGINEERING SYSTEMS, 1999. THIRD INTERNATIONAL CONFERENCE ADELAIDE, SA, AUSTRALIA 31 AUG.-1 SEPT. 1999, PISCATAWAY, NJ, USA,IEEE, US, 31. August 1999 (1999-08-31), Seiten 174-177, XP010371003 ISBN: 0-7803-5578-4
- GUNG-WEI CHIRN ET AL: "Scientific data classification: a case study" TOOLS WITH ARTIFICIAL INTELLIGENCE, 1997. PROCEEDINGS., NINTH IEEE INTERNATIONAL CONFERENCE ON NEWPORT BEACH, CA, USA 3-8 NOV. 1997, LOS ALAMITOS, CA, USA,IEEE COMPUT. SOC, US, 3. November 1997 (1997-11-03), Seiten 216-222, XP010254326 ISBN: 0-8186-8203-5
- SOBOROFF ET. AL.: "Visualizing Document Authorship Using N-grams and Latent Semantic Indexing" WORKSHOP ON NEW PARADIGMS IN INFORMATION, VISUALIZATION AND MANIPULATION, [Online] 1997, Seiten 1-6, XP002192492 Gefunden im Internet: <URL:http://citeseer.nj.nec.com/soboroff97 visualizing.html> [gefunden am 2002-03-08]

## Beschreibung

Die vorliegende Erfindung betrifft allgemein ein Verfahren zur Ermittlung von Ähnlichkeiten in Ereignisfolgen, und insbesondere ein Verfahren zur Ermittlung von Ähnlichkeiten zwischen einer ersten Folge von Ereignissen und zumindest einer weiteren Folge von Ereignissen.

Auf vielen Gebieten der Technik ist es erforderlich die Identität und/oder die Ähnlichkeit von Ereignissen zu bestimmen. Beispielhaft ist es in einem Herstellungsverfahren üblich, das Erzeugnis als eine Form eines Ereignisses mit einem Referenzerzeugnis zu vergleichen, um z. B. Produkte, die nicht den Qualitätsanforderungen genügen auszusortieren, wobei meist gewisse Toleranzen akzeptiert werden, so daß keine absolute Identität, sondern lediglich eine hochgradige Ähnlichkeit zwischen dem Erzeugnis und dem Referenzprodukt bestehen muß.

Solche Verfahren zur Ermittlung der Identität und/oder Ähnlichkeit zwischen Einzelereignissen finden ebenfalls Anwendung in logistischen Verfahren und Systemen, in der Bilderkennung wie auch Spracherkennungsanwendungen, die z. B. eingescannte Dokumente in Text umwandeln (OCR) wie auch im Bereich der Rechtschreibüberprüfung, wo beispielhaft ein falsch geschriebenes Wort als ein Ereignis erkannt und mit einer Vielzahl von Referenzwörtem verglichen werden kann, um dem Benutzer eine Auswahl an möglichst ähnlichen Wörtern bereitzustellen.

Die Bestimmung von Identitäten und/oder Ähnlichkeiten in Einzelereignissen findet ferner Anwendung in der Logistik. So werden z. B. Zahlen, Barcodes oder andere symbolartige Ereignisse bzw. symbolartig darstellbare Ereignisse erfasst, verglichen und ausgewertet. Beispielhaft ist es möglich, Briefe anhand der angegebenen Postleitzahlen zu sortieren. In diesem Zusammenhang kann auch jede Zahl der Postleitzahl als Einzelergebnis aufgefasst werden, so daß auf Identität einer Folge mit Bezug auf eine Referenzfolge verfahren werden kann.

In ähnlicher Weise werden bis dato Ereignisfolgen maßgeblich auf Identität überprüft, wobei teilweise unterstützend oder alternativ Verfahren zum Einsatz kommen, bei denen vorgegebene Ereignisfolgen oder Teilfolgen zum Ausschließen der gesamten Folge genutzt werden können. Beispielhaft wird bei der Herstellung von chargenweise produzierten Produkten, wie z. B. Medikamenten oder Siliziumwafern darauf Wert gelegt, daß wenn man zwei Chargen miteinander kombinieren möchte, diese bevorzugt identisch, jedoch zumindest hochgradig ähnlich sein sollten. Die bisher verfügbaren Verfahren erlauben praktisch nur die Ermittlung von Identitäten zwischen Ereignisfolgen und resultieren somit in nicht vertretbaren Ausschussraten. Um dieser Tatsache entgegenzuwirken, wurde vereinzelt versucht bei der Bestimmung der Identität zwischen Ereignisfolgen einzelne Ereignisse anhand ihrer Ähnlichkeit zu anderen Einzelereignissen zu untersuchen und ggf. gleichzusetzen, um zwei Folgen als identisch bewerten zu können, die über jeweils ähnliche Einzelelemente bzw. -ereignisse verfügen. Diese Vorgehensweise ist jedoch dahingehend nachteilig, daß eine Fehlerhäufung auftreten kann, was wiederum dazu führt, daß die Ausschußrate zu hoch oder die Qualität zu niedrig sein kann.

Auch im Bereich der Texterkennung und -bearbeitung wird versucht die Ähnlichkeit von Ereignisfolgen, z. B. Wortfolgen, zu bestimmen. Bei diesen Verfahren wird z. B. die Häufigkeit von vordefinierten Wörtern als jeweiliges Einzelereignis bestimmt, oder auch die maximale Häufigkeit eines Einzelereignisses als Vergleich zur maximalen Häufigkeit desselben Einzelereignisses in der anderen Folge.

Aus der Veröffentlichung von Lensu et al. "Similar Document Detection Using Self-Organizing Maps", 1999 Third Int'l Conference on Knowledge-Based Intelligent Information Systems, pp. 174-177 ist ein Verfahren zur Ermittlung von Ähnlichkeiten bekannt. Bei den bekannten Verfahren sollen in einem ersten Schritt ähnliche Worte bestimmt werden, unter Verwendung einer alphabetischen Häufigkeitscodierung, gefolgt von einem zweiten Schritt, in dem drei-Wort-Kontexte clustermäßig dargestellt werden, unter Verwendung obiger Codierung zum Aufbau eines Kontextplanes und mit einem dritten abschließenden Schritt, in dem die gesamten Dokumente clustermäßig dargestellt werden sollen, unter Verwendung der Ergebnisse des zweiten Schrittes. Zur Darstellung eines Wortes soll eine Vektordarstellung verwendet werden, dies ermöglicht jeweils ein Wort in einem Neuron zu speichern, und zwar in jegliche Form davon. Bezüglich der Wortanalyse wird somit ein Verfahren beschrieben, bei dem Häufigkeiten von vorbestimmten Ereignismultiplets gegebener Länge ermittelt werden und die ermittelten Häufigkeiten normiert werden. Eine Speicherung wird vorgeschlagen in einem sogenannten dezidierten SOM, welches zur Darstellung weiterer SOMs nutzbar ist, wobei eine Ähnlichkeit dargestellt werden kann, durch die entsprechenden normierten Häufigkeiten.

All diesen Verfahren ist der Nachteil inherent, daß sie es prinzipiell nicht oder nicht vollumfänglich ermöglichen, Ereignisfolgen bezüglich ihrer Ähnlichkeit zu bewerten, da bis dato eine Fehlertoleranz nur bezüglich Einzelereignisse oder in vorbestimmten Untereinheiten der Folgen berücksichtigt werden konnte. Es besteht daher ein Bedarf für ein zuverlässiges und einfaches Verfahren zur Ermittlung von Ähnlichkeiten zwischen unterschiedlichen Ereignisfolgen, um beispielhaft die Zusammenführung von Produktionschargen, die Optimierung von Logistikprozessen oder ähnlichem zu ermöglichen. Aufgabe der Erfindung ist es daher solch ein Verfahren anzugeben.

Erfindungsgemäß wird diese Aufgabe durch ein Verfahren mit den Merkmalen des Anspruchs 1 gelöst. Bevorzugte Ausführungsformen des erfindungsgemäßen Verfahrens sind in den abhängigen Ansprüchen definiert, wobei die Erfindung ebenfalls Verwendungen des Verfahrens betrifft, um Ereignisfolgen oder Unterfolgen aus einer Vielzahl von Ereignisfolgen oder Unterfolgen auszuwählen, zu sortieren, auszusortieren oder anderweitig zu werten. Insbesondere schlägt die Erfindung ein Verfahren zur Ermittlung von Ähnlichkeiten zwischen einer ersten Folge von Ereignissen und zumindest einer weiteren Folge von Ereignissen vor, welches die Schritte umfasst: Ermitteln von Häufigkeiten von möglichen Ereignismultiplets gegebener Länge; normieren der ermittelten Häufigkeiten; speichern der normierten Häufigkeiten als ein Spektrum je Folge; ermitteln des Abstandes zwischen Spektren, wobei vorbestimmte und/oder ergebnisabhängige Spektrenabschnitte gewichtet werden; ausgeben des Abstandes als ein Maß der Ähnlichkeit.

Das erfindungsgemäße Verfahren ermöglicht es somit die Ähnlichkeit zwischen mehreren, z. B. zwei Ereignisfolgen zu bestimmen, so daß z. B. zwei Chargen einer Gesamtproduktion dahingehend bewertet werden können, ob diese gemeinschaftlich benutzt oder zu einer Einheit zusammengefügt werden können. Das erfindungsgemäße Verfahren ermöglicht es somit komplexere Zusammenhänge in den jeweiligen Folgen zu berücksichtigen im Gegensatz zu der bisherigen Praxis, in der Ähnlichkeiten ausschließlich bezüglich Einzelereignissen berücksichtigt wurden. In äußerst überraschender Weise hat sich gezeigt, daß das erfindungsgemäße Verfahren Ähnlichkeiten zwischen Folgen für praktisch unbegrenzte Anwendungsmöglichkeiten bereitstellt. So hat es sich unter anderem gezeigt, daß man mit dem erfindungsgemäßen Verfahren mit hoher Wahrscheinlichkeit feststellen kann, ob eine Produktions-charge mit der selben Herstellungsanlage hergestellt wurde, ob ein Text als eine Ereignisfolge in der selben Sprache, vom selben Verfasser, mit vergleichbarem Inhalt oder anderen, z. B. stilistischen Merkmalen ähnlich zu einem anderen Text oder Referenztext verfaßt wurde. Es ist zu erwähnen, daß je nach Anwendung des erfindungsgemäßen Verfahrens ein Ereignismultiplet unterschiedlich viele Einzelereignisse umfassen kann, wobei insbesondere im Umfeld der Text-, Sprach-, Stil- und/oder Sinnerkennung eine Multipletlänge von zwei oder drei besonders zufriedenstellende Ergebnisse liefern kann. Ein Vorteil des erfindungsgemäßen Verfahrens besteht darin, daß man auch zwei zeitlich oder räumlich voneinander getrennte Ereignisfolgen einfach vergleichen kann, in dem man lediglich das gespeicherte Spektrum von einer Folge übermittelt.

Bei einer bevorzugten Ausftihrungsform werden die Häufigkeiten vorbestimmter und/oder ergebnisabhängiger Ereignismultiplets gewichtet. Durch das Gewichten von vorbestimmten oder ergebnisabhängigen Ereignismultiplets können vorgegebene Ähnlichkeiten, besonders schwach auftretende Ähnlichkeiten oder besonders ausgeprägte Ähnlichkeiten, je nach Anwendung stärker oder schwächer berücksichtigt werden. In dem bereits mehrfach erwähnten Beispiel der Ermittlung von Ähnlichkeiten zwischen zwei Produktionschargen kann man somit besonders vorteilhafte Ereignisfolgen oder Ereignisunterfolgen berücksichtigen oder auch besonders nachteilige ausschließen. Es ist auch möglich, die Abstandsermittlung ergänzend oder alternativ dahingehend durchzuführen, daß man zwischen den involvierten Spektren Schnittmengen, Übereinstimmungen etc. feststellt.

Alternativ oder zusätzlich ist es möglich, vorbestimmte und/oder ergebnisabhängige Ereignisse zu wichten. Als besonders einfache Anwendung sei hier der Fall erwähnt, in dem man es wünscht, bestimmte Einzelereignisse nicht zu berücksichtigen. In diesem Fall ist es möglich entsprechende Ereignismultiplets bei der Ermittlung der Häufigkeiten nicht zu berücksichtigen bzw. die entsprechenden Häufigkeiten auf einen vorbestimmten Wert, z. B. Null zu setzen, wobei alternativ auch die Möglichkeit besteht, die Ereignisfolge selbst dahingehend zu modifizieren, daß man vor dem Bilden der Ereignismultiplets vorbestimmte Einzelereignisse eliminiert. Für das Beispiel, in welchem man das erfindungsgemäße Verfahren auf Texte als Ereignisfolgen anwendet, könnte man somit z. B. Leerstellen zwischen einzelnen Wörtern vor der Bildung der Ereignismultiplets eliminieren oder jene Ereignismultiplets ignorieren, die eine Leerstelle enthalten.

Vorteilhafterweise werden bei dem Verfahren beim ermitteln des Abstandes zwischen Spektren eine oder mehrere Spektren-Operationen durchgeführt. Hierbei kann es sich insbesondere um eine oder mehrere Spektren-Subtraktionen und/oder eine oder mehrere Spektren-Additionen handeln. Eine Spektren-Subtraktion führt zu einem neuen Spektrum, einem sogenannten Ergebnisspektrum, in dem auftretende Peaks Unterschiede zwischen den Ausgangsspektren darstellen. Eine Spektrensummierung kann beispielhaft dazu verwendet werden, eine Vielzahl von Spektren zu einem Referenzspektrum zusammenzuführen, welches man anschließend zur Normierung und/oder Relativierung von Folgen verwenden kann. Beispielhaft ist es somit möglich, Unterschiede zwischen zwei Folgen deutlicher hervorzuheben.

Bei der beispielhaften Anwendung des Verfahrens auf eine chargenmäßige Herstellung von Produkten kann somit z. B. durch Aufsummieren der Spektren der einzelnen Ereignisfolgen je Charge ein Gesamtspektrum für die Gesamtproduktion gebildet werden. Wenn man dieses gebildete Gesamtspektrum normiert und davon ein ebenfalls normiertes Spektrum einer Folge abzieht, die einer Einzelcharge entspricht, so erhält man ein Spektrum, anhand welchem sich die Ähnlichkeit der Einzelcharge zu der Gesamtproduktion ermitteln lässt, indem man z. B. das Spektrum integriert oder eine diesbezügliche Quersumme bildet, wobei der Fachmann verstehen sollte, daß der Begriff Spektrum als breit gefasst zu verstehen ist und sowohl ein Spektrum im klassischen Sinne als auch eine Tabelle oder Matrix oder auch ein anderes geeignetes Mittel zur Darstellung von Häufigkeiten sein kann.

Zusätzlich zu der Berücksichtigung von Häufigkeiten von möglichen Ereignismultiplets kann das erfindungsgemäße Verfahren auch weitere Häufigkeiten oder anders geartete Merkmale in einer Folge berücksichtigen, wobei insbesondere eine oder mehrere der folgenden Häufigkeiten ermittelt, normiert und in jeweils einem Spektrum je Folge gespeichert werden: Häufigkeit von Einzelereignissen; Häufigkeit von vorbestimmten Ereignissen, Ereignisfolgen und/oder Ereignisunterfolgen; Längen von vordefinierten Ereignisfolgen und/oder Ereignisunterfolgen, wobei jeweils optional eine Wichtung vorgesehen sein kann. Diese bevorzugten Ausführungsform eines erfindungsgemäßen Verfahrens ermöglicht es somit bei der Bestimmung der Ähnlichkeit zwischen zwei Ereignisfolgen weitere Merkmale zu berücksichtigen, z. B. ob die einzelnen Folgen die selbe Länge aufweisen, wodurch für den Fall, daß eine Produktionscharge als eine Ereignisfolge angesehen wird, berücksichtigt werden kann, daß die Stückzahl der Produkte als Einzelereignis gleich oder unterschiedlich ist.

Bei einer weiteren bevorzugten Ausführungsform wird beim Ermitteln des Abstandes zwischen Spektren, ein Ereignisspektrum oder gemeinsames Spektrum gebildet, welches bezüglich des positiven Anteiles, bezüglich auftretender Absolutwerte, bezüglich auftretender Zahlenwerte an sich und/oder bezüglich des Über-/Unterschreitens definierter Schwellenwerte als Abstand zwischen den Spektren ausgegeben wird.

Ein Ereignis kann insbesondere ein Symbol, ein Buchstabe, ein Phonem, eine Zahl, eine Eigenschaft und/oder ein Eigenschaftskonglomerat sein, wobei für die Anwendung des erfindungsgemäßen Verfahrens in Herstellungsprozessen Eigenschaften oder Eigenschaftskonglomerate, für die Anwendung in der Logistik Symbole, wie z. B. Barcodes, und für Anwendungen im Text- und/oder Sprachbereich, Buchstaben, Phoneme und/oder Zahlen besonders bevorzugt sind.

Bei einer bevorzugten Ausführungsform des Verfahrens kann ein Ereignis durch ein Symbol, einen Buchstaben, ein Phonem, eine Zahl oder einen Code dargestellt werden und ist insbesondere ein Erzeugnis, ein in Chargen produziertes Einzelerzeugnis, ein logistisches Ereignis oder entspricht einer oder mehreren zuordenbaren Eigenschaften oder Eigenschaftskonglomeraten.

Eine Folge kann vorteilhafterweise eine Herstellungscharge, eine Teilproduktion, ein prozesstechnischer Ablauf, ein logistischer Ablauf, ein Satz, ein Absatz, ein Textabschnitt oder ein Text sein, wobei auch eine entsprechende, z.B. representative Darstellung in dieser Weise möglich ist.

Das Verfahren kann dazu verwendet werden, eine Vielzahl an Folgen und/oder Unterfolgen von Ereignissen zu sortieren. So ist es beispielhaft möglich, Folgen mit großer Ähnlichkeit zu der Gesamtheit an Folgen präferiert zu behandeln und diese z.B. als 1. Wahl Erzeugnisse zu kennzeichnen bzw. das Herstellungsverfahren speziell hierfür zu optimieren. In Sprach- bzw. Textanwendungen wäre es z.B. möglich, unterschiedliche Texte nach ihrer Sprache, ihrem Stil und erstaunlicherweise auch bezüglich ihres Sinngehaltes zu sortieren.

Ferner kann das Verfahren ebenfalls verwendet werden, um aus einer Vielzahl an Folgen und/oder Unterfolgen von Ereignissen diejenigen auszuwählen, die die größte Ähnlichkeit zu einer anderen Folge, einer Referenzfolge und/oder der Gesamtheit der Folgen aufweisen.

Schließlich ist es auch möglich, das Verfahren in der Art und Weise zu verwenden, daß Folgen von Ereignissen aussortiert werden können, die die geringste Ähnlichkeit zu einer anderen Folge, einer Vergleichs- oder Referenzfolge und/oder zu der Gesamtheit der untersuchten Folgen aufweisen.

Der Fachmann wird erkennen, daß die Anwendungsmöglichkeiten des erfindungsgemäßen Verfahrens versatil sind, wobei auch die oben beispielhaft angegebenen Verwendungen miteinander kombiniert werden können, so ist es z.B. möglich, in einem ersten Schritt Folgen mit geringer Ähnlichkeit auszusortieren um die verbleibenden Folgen anschließend zu sortieren.

Lediglich beispielhaft soll im folgenden auf das bereits mehrfach zitierte Beispiel eines in Chargen produzierten Erzeugnisses eingegangen werden. Es wird angenommen, daß ein Produktionsverfahren vier Chargen aus jeweils acht Einzelprodukten erzeugt hat, die im vorliegenden Beispiel mit einem der Buchstaben A, B, C, D angedeutet sind. Jeder Buchstabe kann z.B. einer Produkteigenschaft oder auch einer Abweichung von einem Referenzwert entsprechen, wobei der Fachmann erkennen sollte, daß das angegebene Beispiel nicht als einschränkend zu erachten ist. Es wird also angenommen, daß ein Herstellungsverfahren die folgenden vier Chargen bereitgestellt hat:

| | |
|---|---|
| Folge 1 | AABBCCDD |
| Folge 2 | BADACBDC |
| Folge 3 | ABCDDCBA |
| Folge 4 | ABBCCDDA |

Gemäß einer ersten Anwendung sollen unter den Folgen 2, 3, 4 diejenigen ermittelt werden, die die größte bzw. die kleinste Ähnlichkeit zur Folge 1 aufweisen. Im angegebenen Beispiel kommen die jeweiligen Einzelergebnisse A B C D jeweils zweimal vor, wobei die Folgen 1 bis 4 jeweils eine Länge von 8 aufweisen. Das erfindungsgemäße Verfahren ist nicht auf diese Vorgaben beschränkt, sondern könnte vielmehr auch auf Folgen unterschiedlicher Länge und mit unterschiedlichsten Einzelereignissen angewendet werden; dieses Beispiel wurde lediglich zu Illustrationszwecken gewählt, um zu zeigen, daß Ähnlichkeiten zwischen Folgen auch dann ermittelt werden können, wenn bezüglich der Häufigkeit von Einzelereignissen in den unterschiedlichen Folgen Identität besteht.

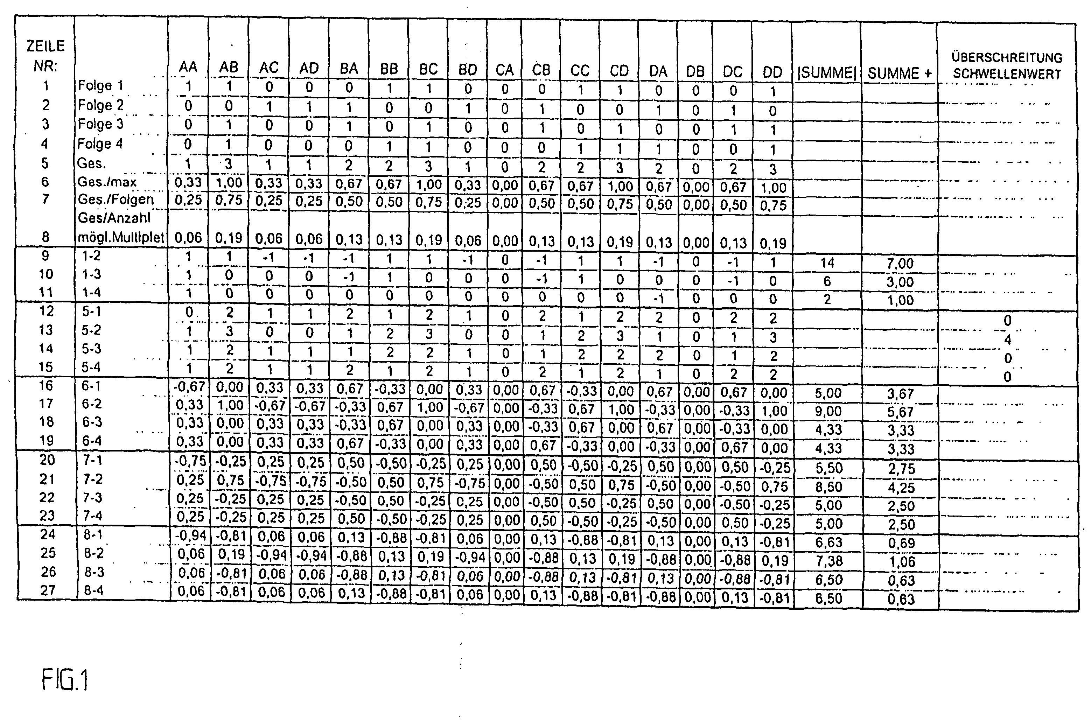

In einem ersten Schritt werden nunmehr die Häufigkeiten von möglichen Ereignismultiplets gegebener Länge -im vorliegenden Fall 2- ermittelt. Diese Ermittlung ist in der in Fig. 1 dargestellten Tabelle für die Folgen 1, 2, 3 und 4 in den Zeilen 1, 2, 3, 4 angegeben. So enthält die erste Folge als erstes Ereignisdaplet die Buchstabenkombination AA, als zweites Ereignisduplet AB, etc. Bei dem gewählten Beispiel ergibt sich für jede der Folgen für jedes möglich Ereignisduplet eine Häufigkeit von entweder Null oder 1, so daß eine Normierung im angegebenen Beispiel nicht erforderlich ist, generell ist es jedoch möglich, unterschiedlichste Normierungen vorzusehen, wie z.B. bezüglich der maximal auftretenden Häufigkeit oder auch beispielhaft der Anzahl an möglichen Ereignismultiplets.

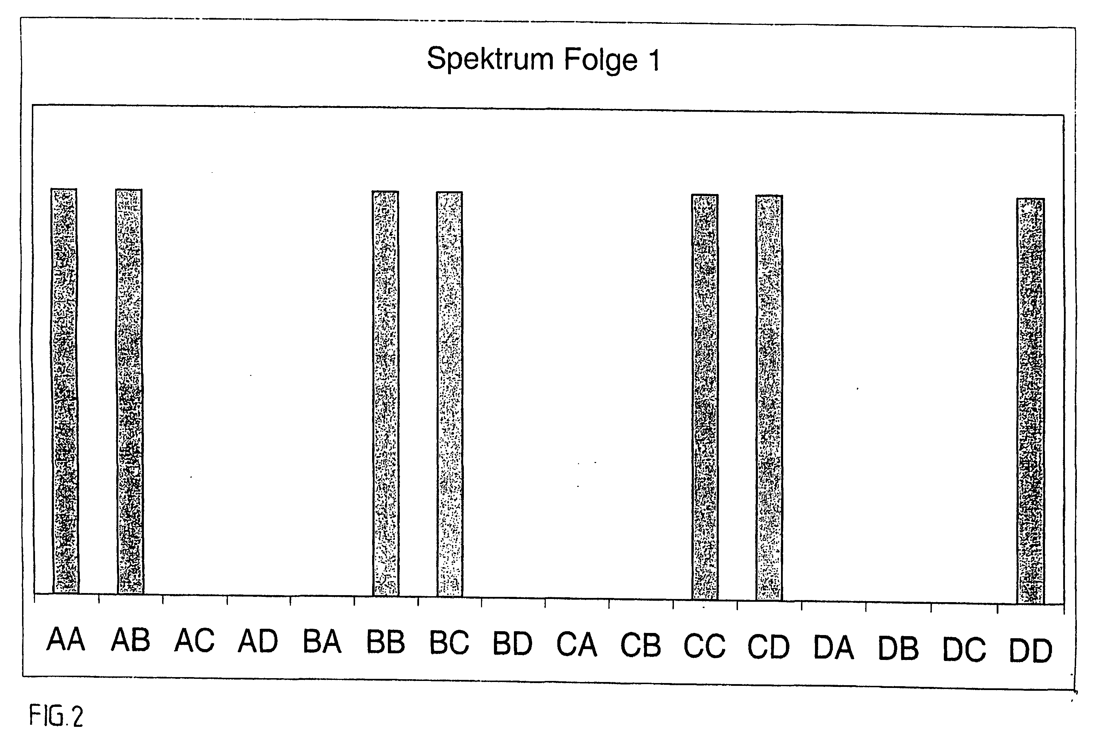

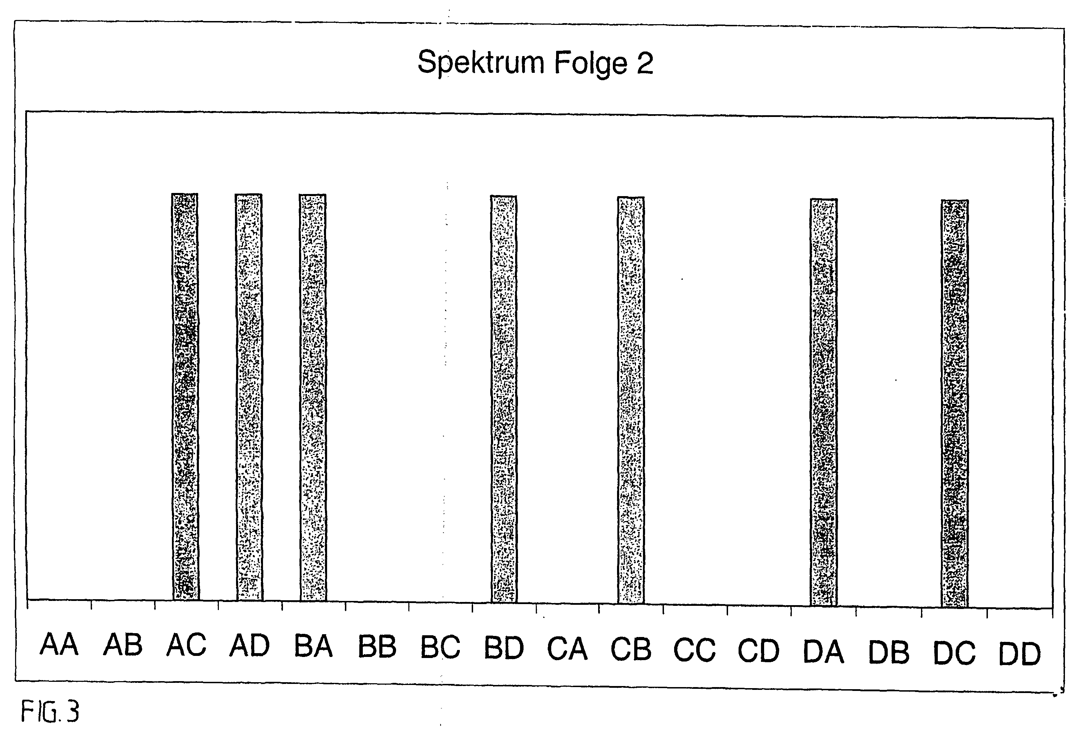

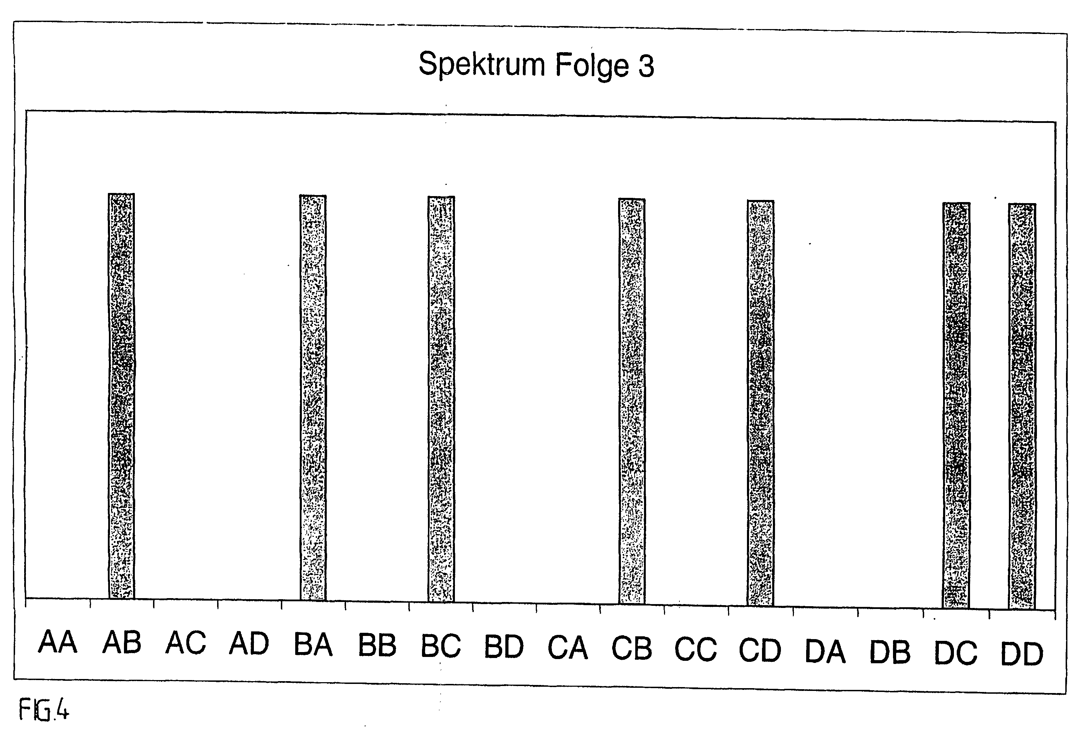

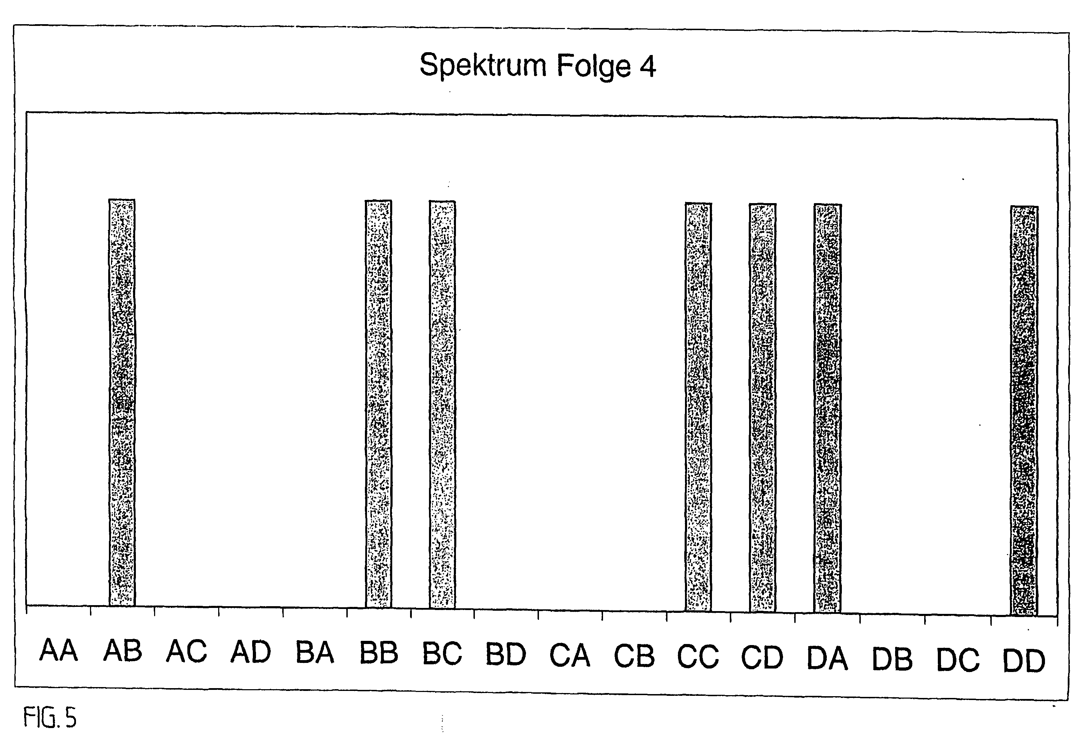

Nachdem man nunmehr die Häufigkeiten von möglichen Ereignismultiplets ermittelt hat und gegebenenfalls eine Normierung durchgeführt hat, werden die normierten Häufigkeiten als ein Spektrum je Folge gespeichert, wobei unter einem Spektrum sowohl eine tabellarische Darstellung wie in Fig. 1 oder auch eine Speicherung in der Form von Spektren gemäß den Figuren 2 bis 5 erfolgen kann.

Nunmehr ist der Abstand zwischen den Spektren zu bestimmen. Nachdem es darum geht, diejenigen Folgen aufzufinden, die die größte bzw. kleinste Ähnlichkeit zur Folge 1 haben, kann man beispielhaft eine einfache Spektrensubtraktion von dem Spektrum der Folge 1 durchführen und erhält somit jeweils die Ergebnisse, wie sie in den Zeilen Nr. 9, 10 und 11 der Tabelle von Fig. 1 wiedergegeben sind. Durch Bilden einer Summe der Betragswerte, entsprechend einer Flächenberechnung der von dem Ergebnisspektrum umfaßten Fläche, erhält man wie angegeben in der Spalte |SUMME| einen Zahlenwert von 14 für die Subtraktion des Spektrums der Folge 2 von dem Spektrum der Folge 1; von 6 für eine Subtraktion des Spektrums der Folge 3 von dem Spektrum der Folge 1 und eine Ziffer von 2 für die Subtraktion des Spektrums der Folge 4 von dem Spektrum der Folge 1. Offensichtlich ist somit die Folge 4 ähnlich zur Folge 1, während die Folge 2 zur Folge 1 unähnlich ist, wobei dies bei dem sehr einfachen angegebenen Beispiel bereits durch einfachen optischen Vergleich der Folgen zu erkennen war.

Alternativ zur Flächenbestimmung der involvierten Differenzspektren kann es auch vorteilhaft sein, lediglich die positiven Bestandteile in einem Spektrum zu berücksichtigen. In diesem Fall gelangt man zu den Zahlenwerten, die in der Spalte "SUMME+" angegeben sind. Bei dem angegebenen Beispiel resultiert entsprechend, daß die Folge 2 unähnlich und die Folge 4 ähnlich zur Folge 1 ist.

Wenn man daher zwei Chargen miteinander kombinieren möchte um beispielhaft ein Gesamterzeugnis oder eine gemeinsame Packung bereitzustellen, würde man diejenigen Chargen kombinieren, die hohe Ähnlichkeit aufweisen, d.h. man würde im angegebenen Beispiel die Charge 1 mit der Charge 4 kombinieren und ein relativ gleichförmiges Gesamterzeugnis bzw. eine relativ gleichförmige Verpackungseinheit erzielen. Diese Anwendung ist insbesondere im pharmazeutischen Bereich anwendbar, wo man derzeit versucht, Medikamente für einen Patienten aus ausschließlich einer Charge bereitzustellen. Wenn der Medikamentenbedarf jedoch eine Chargengröße übersteigt, wäre es wünschenswert den weiteren Bedarf mittels einer Charge zu decken, die zu der zuerst verwendeten möglichst ähnlich ist. Ein weiteres technisches Anwendungsbeispiel besteht in der Herstellung von großflächigen Solaranlagen. Auch hier versucht man einzelne Solarzellen aus einer Charge zu verwenden, so daß derzeit die Größe von herstellbaren Solaranlagen durch die Größe einer Produktionscharge beschränkt ist.

Der Fachmann wird erkennen, daß obige Ausführungen entsprechend anwendbar sind wenn man das Spektrum der Folge 1 als vorab gespeichertes Referenzspektrum ansieht. In diesem Zusammenhang ist festzuhalten, daß das erfindungsgemäße Verfahren auf praktisch unbegrenzte Folgenlängen anwendbar ist und es ermöglicht, ein Spektrum bei einem geringen Speicherbedarf von [mögliche Ereignisse ^{Multipletlänge}] in angegebenen Beispiel 16² Bit gespeichert werden kann.

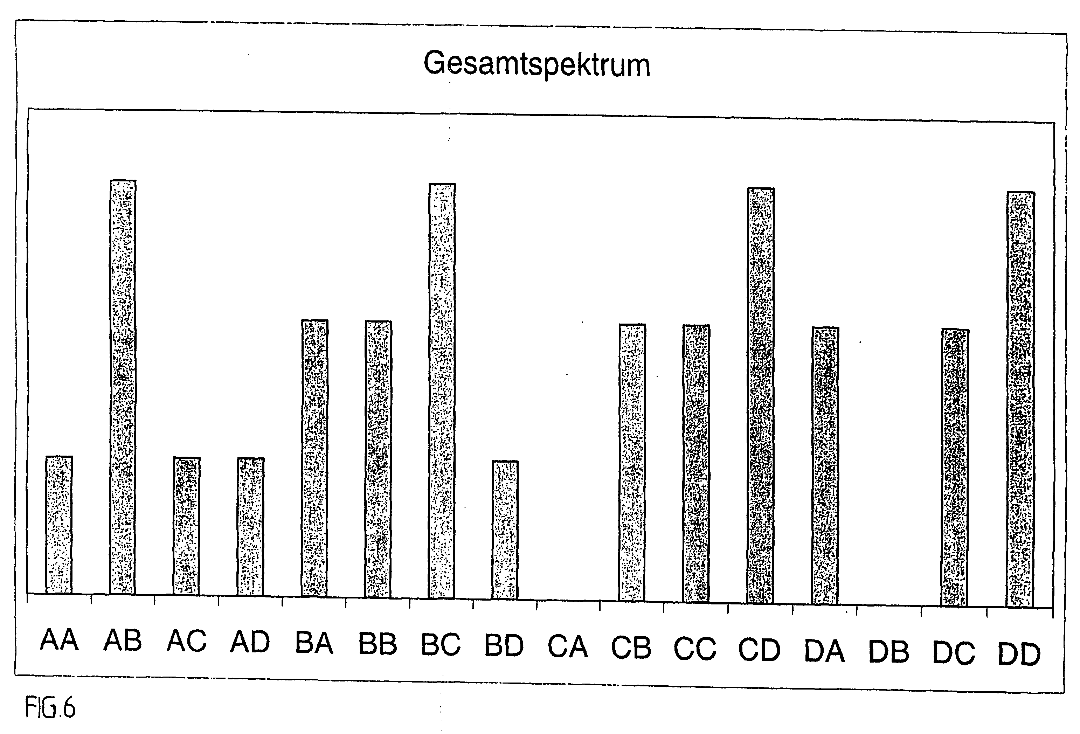

Ein weiteres Beispiel für das erfindungsgemäße Verfahren wird nunmehr unter Bezugnahme auf die oben angegebenen Folgen und unter weiterer Bezugnahme auf die Figuren 1 bis 5 sowie auf die Fig. 6 angegeben, die ein Gesamtspektrum zeigt, erhalten aus sämtlichen Häufigkeiten von Ereignis-Multiplets, wobei im angegebenen Beispiel jene Multiplets nicht berücksichtigt wurden, die im Übergang zwischen einer Folge und der nächsten Folge bestehen, obwohl eine entsprechende Berücksichtigung ebenfalls möglich wäre.

Man erkennt deutlich, daß man ein Gesamtspektrum beispielhaft einfach dadurch erhalten kann, daß man Einzelspektren von Einzelfolgenspektren summiert, d.h. indem man eine einfache Typ-Addition durchführt. Für Text- oder Sprachanwendungen ist es somit z.B. möglich, ein Gesamtspektrum für eine Sprache, z.B. Deutsch oder Englisch bereitzustellen, indem man eine große Anzahl an Texten in der jeweiligen Sprache dahingehend bearbeitet, daß man einzelne Texte oder Textabschnitte mit dem erfindungsgemäßen Verfahren bearbeitet und die erhaltenen Spektren zusammenfaßt. Solch ein Referenz-Spektrum für eine Sprache kann z.B. mit dem Spektrum eines einzelnen Satzes verglichen werden, um eine Wahrscheinlichkeit darüber zu erhalten, ob der untersuchte Satz in der Sprache abgefaßt wurde, die dem Gesamtspektrum der Sprache entspricht. Neben der reinen Sprache ermöglicht es das erfindungsgemäße Verfahren auch stilistische Eigenschaften und sachliche Inhalte zu vergleichen.

Als beispielhafte Anwendung könnte man ein Spektrum eines Autors erstellen, um feststellen zu können, ob eine stilistische Ähnlichkeit zu einem in Frage stehenden Text besteht. Hierdurch könnten z.B. Urheberrechtsverletzungen mit hoher Wahrscheinlichkeit nachgewiesen werden.

In besonders erstaunlicher Weise hat sich auch gezeigt, daß weitere Merkmale eines Textes mit dem erfindungsgemäßen Verfahren bewertet werden können. So ist es z.B. auch möglich, Programmstrukturen z.B. ein Source-Code-Listing auf Ähnlichkeiten zu untersuchen, wie auch inhaltlich besonders repräsentative Aussagen zu vergleichen und gegebenenfalls aus einem längeren Text zu ermitteln.

Zur Verdeutlichung soll nun auf das angegebene Beispiel mit den vier Folgen zurückgekommen werden. Wenn man die Gesamtheit dieser vier Folgen betrachtet, erkennt man bedingt durch die Simplizität des gewählten Beispieles, daß die Folge 2, obwohl sie über die selben Einzelereignisse verfügt, nicht in die Gesamtheit der Folgen paßt. Wenn man daß wie vorangehend beschrieben erhaltene Gesamtspektrum normiert, gelangt man zu Zahlenwerten, wie sie in den Zeilen 6, 7 und 8 in der Tabelle von Fig. 1 angegeben sind, wobei jeweils eine Normierung auf den Maximalwert, die Anzahl an Folgen bzw. die Anzahl von möglichen Multiplets vorgenommen wurde. Von diesen jeweiligen Zahlenwerten wurden in den Zeilen 16 bis 27 jeweils die entsprechenden Häufigkeiten für jede einzelne Folge 1 bis 4 abgezogen. Erneut wurde der Flächeninhalt bzw. der positive Anteil des Flächeninhaltes des Spektrums ermittelt, wobei in den jeweiligen Zeilen für einen Vergleich mit der Folge 2, dies sind die Zeilen 17, 21, 25 ein auffallend großer Wert abzulesen ist, der eine starke Unähnlichkeit bezüglich der Gesamtheit an auftretenden Häufigkeiten von Ereignis-Multiplets darstellt. Dies spiegelt die bereits intuitiv erfaßte Tatsache, daß die Folge 2 nicht in das Gesamtbild paßt, wieder.

Schließlich wäre es auch möglich, diesen Sachverhalt dadurch festzustellen, daß man die Überschreitung eines Schwellenwertes bzw. die Häufigkeit einer Überschreitung eines Schwellenwertes betrachte, wie dies in den Zeilen 12 bis 15 der Tabelle von Fig. 1 angegeben ist. In diesen Spalten wird von einem nicht normierten Gesamtspektrum, Zeile 5, jeweils das Spektrum der Folgen 1, 2, 3, und 4 abgezogen, wobei ein Überschreiten eines Schwellenwertes von 2 im gewählten Beispiel lediglich für den Fall der Folge 2 ermittelt werden kann, so daß man schließen kann, daß diese Folge nicht zu den übrigen Folgen paßt bzw. diesbezüglich unähnlich ist.

Zusammenfassend läßt sich feststellen, daß das erfindungsgemäße Verfahren es ermöglicht, beliebige Ereignisfolgen bezüglich ihrer Ähnlichkeit zu bewerten und dies unter Ausnutzung komplexer Zusammenhänge in Herstellungsverfahren, logistischen Verfahren, Text und/oder Sprache, ohne Kenntnisse bezüglich dieser komplexen Zusammenhänge zu benötigen, so daß das Verfahren in höchst vielfältiger Weise anwendbar ist.

## Patentansprüche

1. Verfahren zur Ermittlung von Ähnlichkeiten zwischen einer ersten Folge von Ereignissen und zumindest einer weiteren Folge von Ereignissen mit den Schritten:
- Ermitteln von Häufigkeiten von möglichen Ereignis-Multiplets gegebener Länge;
- normieren der ermittelten Häufigkeiten;
- speichern der normierten Häufigkeiten als ein Spektrum je Folge;
- ermitteln des Abstandes zwischen Spektren, wobei vorbestimmte und/oder ergebnisabhängige Spektrenabschnitte gewichtet werden;
- ausgeben des Abstandes als ein Maß der Ähnlichkeit.

2. Verfahren nach Anspruch 1, bei welchem die Häufigkeiten vorbestimmter und/oder ergebnissabhängiger Ereignis-Multiplets gewichtet werden.

3. Verfahren nach Anspruch 1 oder 2, bei welchem vorbestimmte und/oder ergebnisabhängige Ereignisse gewichtet werden.

4. Verfahren nach einem der vorangehenden Ansprüche, bei welchem beim ermitteln des Abstandes zwischen Spektren eine oder mehrere Spektren-Operationen durchgeführt werden, insbesondere eine oder mehrere Spektren-Subtraktionen und/oder eine oder mehrere Spektren-Additionen.

5. Verfahren nach einem der vorangegangenen Ansprüche, bei welchem ferner eine oder mehrere der folgenden Häufigkeiten ermittelt, normiert und in jeweils einem Spektrum je Folge gespeichert werden:
- Häufigkeit von einzelnen Ereignissen;
- Häufigkeit von vorbestimmten Ereignissen, Ereignis-Folgen und/oder Ereignis-Unterfolgen;
- Längen von vordefinierten Ereignis-Unterfolgen,
wobei jeweils optional eine Wichtung vorgesehen ist.

6. Verfahren nach einem der vorangegangenen Ansprüche, bei welchem beim ermitteln des Abstandes zwischen Spektren ein Ergebnisspektrum oder gemeinsames Spektrum gebildet wird, welches bezüglich des positiven Anteiles, bezüglich auftretender Absolutwerte, bezüglich auftretender Zahlenwerte an sich und/oder bezüglich des Über-/Unterschreitens definierter Schwellenwerte als Abstand zwischen Spektren ausgewertet wird.

7. Verfahren nach einem der vorangegangenen Ansprüche, bei welchem ein Ereignis ein Symbol, ein Buchstabe, ein Phonem, eine Zahl, eine Eigenschaft und/oder ein Eigenschaftskonglomerat ist.

8. Verfahren nach einem der vorangegangenen Ansprüche, bei welchem ein Ereignis durch ein Symbol, einen Buchstaben, ein Phonem, eine Zahl oder einen Code darstellbar ist, insbesondere ein Erzeugnis, ein chargen-produziertes Einzelerzeugnis, ein logistisches Ereignis ist oder einer oder mehreren zuordenbaren Eigenschaften oder Eigenschaftskonglomeraten entspricht.

9. Verfahren nach einem der vorangegangenen Ansprüche, bei welchem eine Folge eine Herstellungscharge, eine Teilproduktion, ein prozesstechnischer Ablauf, ein logistischer Ablauf, ein Satz, ein Absatz, ein Textabschnitt oder ein Text ist oder als solches darstellbar ist.

10. Verwendung des Verfahrens nach einem der Ansprüche 1 bis 9, um eine Vielzahl an Folgen und/oder Unterfolgen von Ereignissen zu sortieren.

11. Verwendung des Verfahrens nach einem der Ansprüche 1 bis 9, um aus einer Vielzahl an Folgen und/oder Unterfolgen von Ereignissen diejenigen auszuwählen, die die größte Ähnlichkeit zu einer anderen Folge, einer Referenzfolge und/oder der Gesamtheit der Folgen aufweisen.

12. Verwendung des Verfahrens nach einem der Ansprüche 1 bis 9, um Folgen von Ereignissen auszusortieren, die die geringste Ähnlichkeit zu einer anderen Folge, einer Vergleichs- oder Referenzfolge und/oder zu der Gesamtheit der Folgen aufweisen.

## Claims

1. Procedure for determining similarities between a first event sequence
and at least another event sequence comprising the following phases :
- determining frequencies of possible event multiplets of given lengths;
- standardizing determined frequencies;
- saving standardized frequencies as a spectrum per sequence;
- determining the distance between the spectrums, weighting the predetermined and/or results-dependent spectrum sections;
- displaying the distance as a measure of similarity.

2. Procedure according to Claim 1, in which the predetermined and/or results-dependent frequencies of event multiplets are weighted.

3. Procedure according to Claim 1 or 2, in which predetermined and/or results-dependent events are weighted.

4. Procedure according to any of the preceding claims, in which, when determining the distance between the spectrums, one or several spectrum operations are carried out, in particular one or several spectrum subtractions and/or one or several spectrum additions.

5. Procedure according to any of the preceding claims, in which, moreover, one or several of the following frequencies are determined, standardized and saved respectively in one spectrum per sequence:
- frequency of individual events;
- frequency of predetermined events, event sequences and/or event sub-sequences;
- lengths of predefined event sub-sequences;
an optional weighting being provided, respectively.

6. Procedure according to any of the preceding claims, in which, when determining the distance between the spectrums, a results spectrum or common spectrum is formed, which is evaluated for the positive share , the occurring absolute values, the occurring numerical values as such and/or the exceedance above or below of defined threshold values as the distance between spectrums.

7. Procedure according to any of the preceding claims, in which an event is a symbol, a letter, a phoneme, a number, a property and/or a conglomerate of properties.

8. Procedure according to any of the preceding claims, in which an event may be represented by a symbol, a letter, a phoneme, a number or a code, in particular a product, an individual charge-produced product, a logistic event, or corresponds to one or several attributable properties or agglomerates of properties.

9. Procedure according to any of the preceding claims, in which a sequence is or may be represented as a production charge, a partial production, process-technical flow, logistic flow, phrase, paragraph, text section or text.

10. Utilization of said procedure according to any of Claims 1 to 9, for sorting a plurality of event sequences and/or event sub-sequences.

11. Utilization of said procedure according to any of Claims 1 to 9, for selecting, among a plurality of event sequences and/or event sub-sequences, the ones having the greatest similarity with another sequence, reference sequence and/or the totality of sequences.

12. Utilization of said procedure according to any of Claims 1 to 9, for sorting out those event sequences having the least similarity with another sequence, a comparison or reference sequence and/or the totality of sequences.

## Revendications

1. Procédé de détermination de similarités entre une première séquence d'événements et au moins une autre séquence d'événements comprenant les phases suivantes :
- détermination de fréquences de multiplets d'événements possibles de longueurs données ;
- normation des fréquences déterminées ;
- stockage des fréquences normées en tant que spectre par séquence ;
- détermination de la distance entre les spectres, avec pondération de secteurs de spectre prédéterminés et/ou dépendants de résultats ;
- affichage de la distance comme mesure de la similarité.

2. Procédé selon la revendication 1, dans lequel les fréquences de multiplets d'événements prédéterminés et/ou dépendants de résultat sont pondérés.

3. Procédé selon les revendications 1 ou 2, dans lequel des événements prédéterminés et/ou dépendants de résultat sont pondérés.

4. Procédé selon une quelconque des revendications précédentes, dans lequel, lors de la détermination de la distance entre les spectres, une ou plusieurs opérations de spectre sont effectuées, en particulier une ou plusieurs soustractions de spectres et/ou une ou plusieurs additions de spectres.

5. Procédé selon une quelconque des revendications précédentes, dans lequel, de plus, une ou plusieurs des fréquences suivantes sont déterminées, normées et stockées respectivement dans un spectre par séquence:
- fréquence d'événements individuels ;
- fréquence d'événements, de séquences d'événements et/ou de sous-séquences d'événements prédéterminés ;
- longueurs de sous-séquences d'événements ;
une pondération optionnelle étant prévue respectivement.

6. Procédé selon une quelconque des revendications précédentes, dans lequel, lors de la détermination de la distance entre les spectres, est formé un spectre de résultat ou spectre commun qui est évalué pour la part positive, les valeurs absolues qui se présentent, les valeurs numériques qui se présentent en soi et /ou par rapport au dépassement en plus ou en moins de valeurs limites définies, en tant que distance entre spectres.

7. Procédé selon une quelconque des revendications précédentes, dans lequel un événement est un symbole, une lettre, un phonème, un chiffre, une propriété et/ou un congloméré de propriétés.

8. Procédé selon une quelconque des revendications précédentes, dans lequel un événement peut être représenté par un symbole, une lettre, un phonème, un chiffre ou un code, en particulier un produit, un produit individuel par lot, un événement logistique, ou correspond à une ou plusieurs propriétés ou conglomérés de propriétés attribuables.

9. Procédé selon une quelconque des revendications précédentes, dans lequel une séquence est ou peut être représentée en tant que lot de production, production partielle, processus de technique du procédé, processus logistique, phrase, paragraphe, section de texte ou texte.

10. Utilisation du procédé selon une quelconque des revendications 1 à 9, pour trier une pluralité de séquences et/ou sous-séquences d'événements.

11. Utilisation du procédé selon une quelconque des revendications 1 à 9, pour sélectionner, dans une pluralité de séquences et/ou de sous-séquences d'événements, celles qui possèdent la plus grande similarité avec une autre séquence, séquence de références et/ou avec la totalité des séquences.

12. Utilisation du procédé selon une quelconque des revendications 1 à 9, pour trier les séquences d'événements qui possèdent la moindre similarité avec une autre séquence, une séquence de comparaison ou de référence et/ou avec la totalité des séquences.
